Europäisches Patentamt

European Patent Office

Office européen des brevets

(11) Publication number: **0 107 469**
**B1**

# (12) EUROPEAN PATENT SPECIFICATION

(45) Date of publication of patent specification: **17.02.88**

(51) Int. Cl.⁴: **H 01 M 2/12**

(21) Application number: **83306294.6**

(22) Date of filing: **17.10.83**

(54) **Low silhouette venting system for electric storage battery.**

(30) Priority: **28.10.82 US 437312**

(43) Date of publication of application:
**02.05.84 Bulletin 84/18**

(45) Publication of the grant of the patent:
**17.02.88 Bulletin 88/07**

(84) Designated Contracting States:
**DE FR GB**

(56) References cited:
**DE-A-2 906 538**
**GB-A- 233 528**
**US-A-3 772 088**
**US-A-4 306 002**
**US-A-4 348 466**

(73) Proprietor: **GENERAL MOTORS CORPORATION**
**General Motors Building 3044 West Grand**
**Boulevard**
**Detroit Michigan 48202 (US)**

(72) Inventor: **Poe, David Thomas**
**R. 1, Box 274B**
**Yorktown Indiana 47396 (US)**

(74) Representative: **Haines, Arthur Donald et al**
**GM Patent Section Luton Office (F6) P.O. Box**
**No. 3 Kimpton Road**
**Luton, Beds. LU2 OSY (GB)**

Courier Press, Leamington Spa, England.

## Description

This invention relates to electric storage batteries and more specifically to venting systems therefor.

Background of the Invention

Pb-acid storage batteries, among others, generate gases during cycling. These gases are vented from the inside of the battery to the ambient atmosphere via venting systems designed to permit gas passage but inhibit the outflow of electrolyte (i.e. from the inside of the battery to the ambient atmosphere) therethrough. The trapped electrolyte is then drained back into the battery cells from whence it came.

There are essentially two types of battery venting systems commonly in use. These types can be classified as either vertical-type or horizontal-type depending on the orientation of the chamber used to trap the electrolyte. In this regard, both types typically include an electrolyte trapping chamber which is located between a vent/drainage aperture that leads to the electrochemical components of the battery (i.e., plates, electrodes, and separators) and an exhaust port which leads to the atmosphere. The venting/drainage aperture usually passes through the floor of the electrolyte trapping chamber and is sized to allow gas passage therethrough while minimizing entry of electrolyte splash into the trapping chamber. Nonetheless, the trapping chambers are commonly invaded by electrolyte passing up through the venting/drainage aperture as a result of excessive overcharging, sloshing, and splashing (i.e., due to mishandling, vibration, tilting, or the like).

To substantially prevent electrolyte from exiting the battery, trapping chambers are typically equipped with a variety of baffles or the like to inhibit electrolyte mobility and substantially prevent its reaching the exhaust port and escaping to the ambient atmosphere. Sloping chamber floors are typically used to facilitate draining back (i.e., refluxing) of the electrolyte into the cell through the same aperture from whence it came.

Discrete vent plugs found on many batteries exemplify vertical-type vent systems. The plugs typically include a deep, cylindrical chamber which fits tightly into the filler well of the battery. Separation of the electrolyte from the gas occurs primarily by gravity as the gasses rise vertically through the cylindrical chamber and the heavier electrolyte falls to the chamber floor. The floor of the chamber slopes toward a central aperture through which the gases can pass upwardly and the electrolyte can drain back into the cell. The top of the chamber has an exhaust port for discharging the gases to the atmosphere. The chamber may also contain a variety of internal baffles to prevent electrolyte from reaching the exhaust port.

Horizontal-type vent systems, on the other hand, are most frequently formed integrally with the battery cover and typically include an elongated chamber extending horizontally across at least part of the top of the battery. The vent/drainage aperture is usually located laterally and elevationally remote from the exhaust port, and the gases passing through the vent/drainage aperture horizontally traverse much of the length of the chamber before discharge to the ambient atmosphere. GB-A-233 528 discloses a horizontal-type vent system having these features. Such designs frequently employ a manifolding arrangement whereby several trapping chambers share a single exhaust port.

Horizontal-type venting systems are generally more susceptible to electrolyte leakage than vertical systems. In this regard, the substantial loss of the benefits of gravity, the wettability of the surfaces defining the electrolyte-trapping chamber, and the ability of the electrolyte to move more readily through horizontal chambers (i.e., incident to vibration, jostling and surface tension effects) substantially increase the risk of electrolyte reaching and escaping the exhaust port. In order to minimize this leakage, the trapping chambers have been made relatively deep and thereby add non-productive height to the battery. Unnecessarily tall starting-lighting-ignition (SLI) batteries are particularly undesirable in modern times where the trend toward smaller vehicles dictates the need for smaller batteries. Likewise more leak-proof SLI batteries are desirable not only to conserve electrolyte and prevent corrosion of vehicular parts, but also to permit location of the battery in a vehicle at sites not readily available for convenient battery maintenance.

US-A-4 306 002 discloses a horizontal-type venting system formed in a cover of an electric storage battery for relieving gases from the interior of the battery while inhibiting electrolyte escape therefrom, said venting system including an electrolyte drainage aperture for refluxing electrolyte to said interior, an exhaust port for passing gases to the ambient atmosphere and an electrolyte trapping and refluxing chamber between said aperture and said port, in which said chamber comprises an antechamber adjacent said exhaust port, said antechamber being defined in part by a canted floor sloping downwardly from said port in a first direction towards a sump situated at substantially the lowest point of said canted floor, and said pump being defined in part by an inclined floor lying beneath said canted floor and sloping downwardly towards said aperture in a direction substantially different than said first direction.

The present invention comprises an improvement of the horizontal-type venting system disclosed in US-A-4 306 002, in that the electrolyte trapping and refluxing chamber includes partition means extending from and above the inclined and canted floors, said partition means further defining the sump and separating it from the antechamber and the interior; and a substantially vertical slot in the partition means at substantially the lowest point of the canted floor for providing flow communication between the sump and the antechamber, the slot being sufficiently narrow as to permit egress of gas from the sump and regress of electrolyte to the sump but to inhibit egress of electrolyte from the sump; any electrolyte invading the sump from the interior having first to travel upwardly in one direction along the inclined floor, traverse the slot, and then travel upwardly along the canted floor in a substantially different direction before reaching a position sufficiently close to the exhaust port as to permit possible escape therethrough.

It is an object of the present invention to provide a low-silhouette, horizontal-type venting system having manifestly improved electrolyte trapping and refluxing characteristics. This and other objects and advantages of the present invention will become more readily apparent from the detailed description thereof which follows.

Brief Description of the Invention

The present invention comprehends an electric storage battery having a low silhouette, horizontal-type, compartmentalized, electrolyte-trapping, battery gas venting system formed integrally with the cover of the battery container. The venting system includes a gas exhaust port at one end, an electrolyte vent/drainage aperture at the other end, a dual compartment electrolyte trapping/refluxing chamber therebetween, and an electrolyte outflow restricting opening joining the two compartments. The compartmented trapping/refluxing chamber includes an antechamber proximate the exhaust port, a sump proximate the vent/drainage aperture, a plurality of substantially vertical partitions separating the sump from the antechamber and a narrow, electrolyte-restrictive (i.e., outflowwise) opening or openings in the partition(s) to provide gas/electrolyte flow communication between the antechamber and the sump.

The antechamber is defined in part by a canting floor which slopes downwardly away from the exhaust port and towards the sump. At substantially the low point of the canting floor, a small opening(s) [preferably a narrow vertical slot(s)] is/are provided in the partition(s) separating the antechamber from the sump. The slot(s) concurrently permit(s) gases to flow from the sump to the antechamber and electrolyte to flow from the antechamber back to the sump but restricts electrolyte entry into the antechamber from the sump. Preferably two such slots are located in opposed partitions lying substantially perpendicular to the floor of the antechamber and parallel to the direction that the floor slopes. Not only does two slots more quickly remove accumulated electrolyte for reduced sloshing in the antechamber, but when located in the slope-paralleling partitions, any electrolyte that might pass up through the slots must first make a sharp turn (i.e., 90°) before it can traverse the antechamber toward the exhaust port.

The sump is defined by an inclined floor as well as by the portions of the partitions which separate it from the antechamber. The inclined floor lies beneath the antechamber floor and slopes in a substantially different (preferably opposite) direction to that of the canting antechamber floor. The antechamber and sump floors are so spaced apart at the restrictive opening(s) as to provide a riser therebetween which still further impedes electrolyte passage from the sump to the antechamber. A venting/drainage aperture(s) at substantially the low point of the inclined floor communicate(s) the sump with the inside of the cell. For maximum protection against leakage, there will be two apertures (preferably vertical slots) in the opposing vertical partition(s) separating the sump from the inside of the cell. The two slots not only drain the sump more quickly to reduce sloshing therein but their positioning in the vertical partitions (i.e., in contrast to through the floor) even further reduces entry of electrolyte into the sump through the apertures.

The combination of two separate compartments (i.e., antechamber and sump) having floors sloping in different directions and communicating one with the other only by means of an electrolyte restrictive opening (e.g. a narrow vertical slope) alone substantially impedes the movement of electrolyte from the drainage aperture to the exhaust port. In a preferred embodiment, however, a baffle(s) will also be positioned in the sump transverse the direction of electrolyte flow from the drainage aperture to the restrictive opening between the sump and the antechamber in order to deflect/divert the electrolyte and thereby further deter any electrolyte from making the journey from the aperture to the antechamber-sump slot(s).

In accordance with a further feature of the present invention, the aforesaid compartmented venting system will also include means for capillarily refluxing electrolyte from the antechamber to the sump and/or from the sump to the inside of the cell. The addition of capillary refluxing means to the antechamber-sump slot(s) and the sump-cell aperture(s) provides better drainage for the respective floors even when relatively narrow slots and vertically elongated aperture(s) are used. By way of contrast, very small symmetrical opening(s)/aperture(s) are not normally conducive to optimum drain back of the electrolyte. In this regard, the surface tension between the electrolyte and the edges of the symmetrical opening(s)/aperture(s) tends to create a liquid plug which holds back the electrolyte until such time as a sufficient head of electrolyte can accumulate on the floor to overcome that surface tension. The use of capillary relfuxers at the opening(s)/aperture(s) alleviates this problem and the use of vertically oriented slots or elongated apertures therewith virtually eliminates the problem. Hence and in accordance with a preferred embodiment of the present invention, narrow capillary refluxing channels are positioned contiguous the cell-side of the sump-to-antechamber slot(s) and/or the sump-to-cell aperture(s). This refluxing channel, like a capillary tube, uses surface tension to effectively pull or draw the electrolyte through the slot(s) or aperture(s) and discharge it at its low end to the sump or cell respectively — hence the term "capillarily refluxing" the electrolyte. At the antechamber-to-sump slot(s) the capillary refluxing channel extends from the floor of the antechamber to the floor of the sump along the riser between the floors.

In one particular effective construction, the sump is provided with two opposing vertical drainage slots, one in each of the opposed vertical partitions defining the sump and separating it from the innards. Each drainage slot is provided with its own vertical capillary refluxing channel on the innards side of the aperture and the lowermost ends of these channels are joined together by a horizontal channel having substantially the same width as the vertical channels. The horizontal channel enhances the refluxing action of the two vertical channels by capillarily consolidating their respective flows into a single droplet for quicker return to the inside of the cell than would otherwise occur if two separate droplets were formed.

Detailed Description of Specific Embodiments.

This invention may be better understood when considered in the light of the following detailed description of certain specific embodiments thereof, which description is given in conjunction with the accompanying drawings in which:

Figure 1 is an isometric view of a battery having two, horizontal-type, venting manifolds each servicing three of the six cells of the battery;

Figure 2 is an enlarged, partially broken away, plan view of one of the venting manifolds of Figure 1;

Figure 3 is a side, sectioned view taken in the direction 3—3 of Figure 2;

Figure 4 is a bottom, sectioned view taken in the direction 4—4 of Figure 3;

Figure 5 is a front, sectioned view taken in the direction 5—5 of Figure 3;

Figure 6 is a front, sectioned view taken in the direction 6—6 of Figure 3;

Figure 7 is a front, sectioned view taken in the direction 7—7 of Figure 3;

Figure 8 is a front, sectioned view taken in the direction 8—8 of Figure 3;

Figure 9 is a front, sectioned view taken in the direction 9—9 of Figure 3;

Figure 10 is an exploded, isometric view of the venting system of Figures 1—9;

Figure 11 is an isometric view of the underside of the venting system of Figures 1—10;

Figure 12 is an enlarged, partially broken away, plan view like that of Figure 2, but of another, and preferred, embodiment of the invention;

Figure 13 is a side, sectioned view, taken in the direction 13—13 of Figure 12;

Figure 14 is a bottom, sectioned view taken in the direction 14—14 of Figure 13; and

Figure 15 is an exploded, isometric view, like that of Figure 10, but of the embodiment of Figures 12—15.

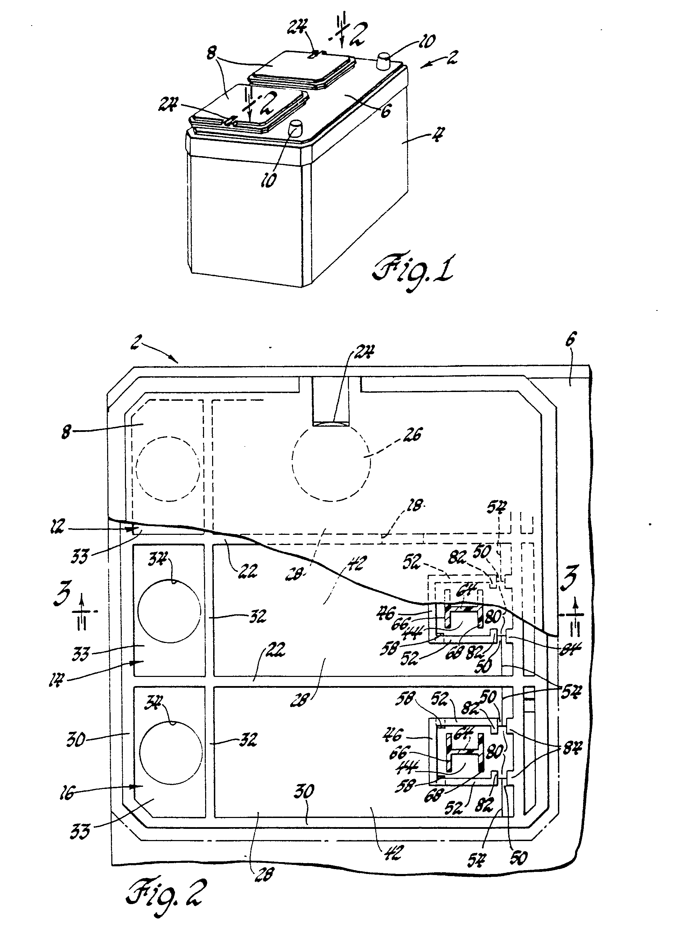

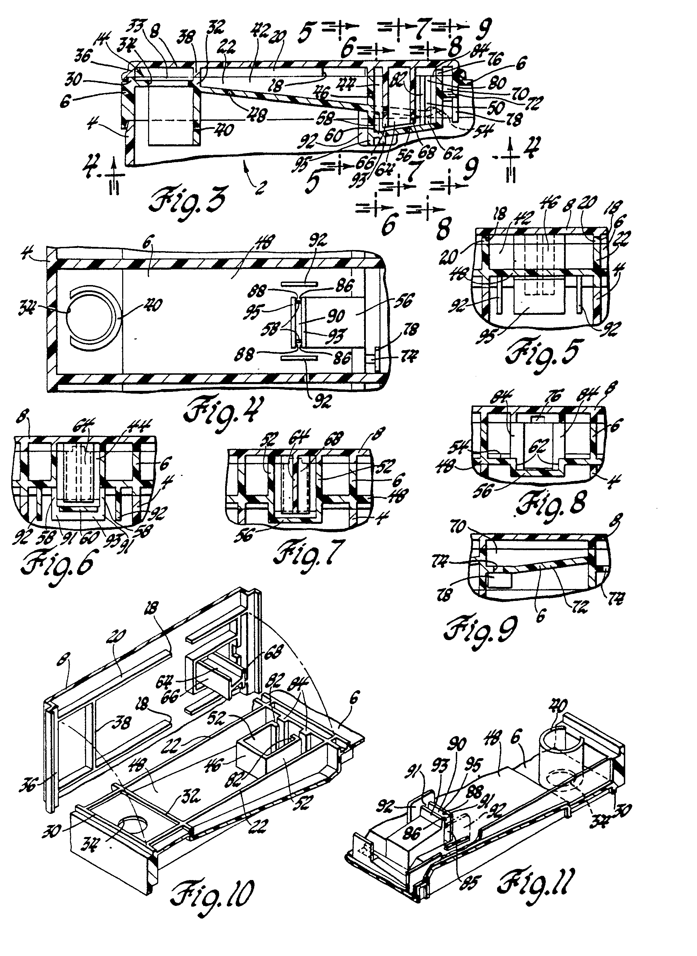

Structure common to both embodiments (i.e., Figures 1—11 and Figures 12—15) described herein are designated by the same numerals in all Figures.

Figure 1 depicts a lead-acid, SLI battery 2 having a container 4, an intermediate cover 6 and final covers 8 each enclosing three separate venting systems moulded into the intermediate cover 6. The container 4 defines six individual cell compartments each housing one of six series-connected cells for providing a 12-volt potential at the terminals 10. Each cell has its own individual venting system, though the several systems are manifolded together, in sets of three, and share a common flame arrestor 26.

Figures 2—11 show one embodiment of a venting system made in accordance with the present invention. The intermediate cover 6 includes an upstanding wall 30 which defines the periphery of a rectangular enclosure for housing three of the venting systems 12, 14 and 16 of the battery. The wall 30 is heat sealed to depending peripheral flange 36 on the final cover 8 to complete the enclosure. Ridges 22 upstanding from the intermediate cover divide the enclosure into three sections 28 each overlying an individual cell. In this regard and as best shown in Figures 2 and 3, each cell has its own venting system 12, 14 and 16 which extends horizontally across the top of its associated cell. The several systems each exhaust and communicate, one with the other and the flame arrestor 26, via small notches 18 formed in depending ridges 20 of cover 8. During assembly, the ridges 20 are heat sealed to the upstanding ridges 22 on the intermediate cover 6 and together define septums which separate the individual venting systems one from the other. The notches 18 remain unsealed and ensure that the three otherwise separate venting systems 12, 14 and 16 may all share a common atmospheric exhaust port 24 contiguous the flame arrestor 26. Short wall segments 32 between the ridges 22 and the peripheral wall 30 divide each of the sections 28 into an electrolyte filler portion 33 and a venting system portion 42 (hereafter termed "antechamber") of a venting chamber. Transverse ridges 38 on final cover 8 are heat sealed atop the ridges 32 to totally isolate the electrolyte filler portion 33 from the antechamber 42. The electrolyte filler portion 33 includes a hole 34 through which electrolyte is added to the battery before assembly of the final cover 8. A semicylindrical skirt 40 depends from the intermediate cover 6 adjacent the filler hole 34 to minimise electrolyte splash-back into the filler portion 33 especially during filling.

The dual compartment venting chamber comprises the antechamber 42 and a sump 44 separated one from the other by a frontal partition 46 and lateral partitions 52. The antechamber 42 has a canting floor 48 which slopes downwardly toward the sump 44. Narrow, electrolyte outflow restricting slots 50 are provided in the opposed lateral partitions 52 which lie substantially parallel to the direction the canting floor 48 slopes. These slopes 50 are located at substantially the lowest point 54 of the canting floor 48 to return any electrolyte in the antechamber back to the sump while still permitting the gases to concurrently vent therethrough. The slots 50 are preferably about 2.5 mm wide. The sump 44 lies beneath the antechamber 42, is defined by the partitions 46 and 52 and also includes an inclined floor 56 which slopes in the opposite direction to the canting floor 48. At the slots 50, the inclined floor 56 is spaced from the canting floor 48 by a short distance so as to provide a riser 62 in the opposed lateral partitions 52. Narrow venting/draining slots 58 are provided in the lateral partitions 52 at substantially the low point 60 of the floor 56 to vent the gases and return any electrolyte in the sump back to the cell interior. The narrow vertically oriented slots 50 and 58 are preferred to small isometric openings/apertures since, under normal usage, gases may escape through the top of the slots while electrolyte refluxes through the bottom thereof without substantially plugging of the slots with liquid.

An integral, H-shaped baffle 64 depends from the final cover 8 into the sump 44 and into close proximity to the inclined floor 56. Flange portions 66 and 68 of the H-shaped baffle 64 lie transverse to the direction that the floor 56 slopes and serve to divert or deflect the upward flow of splashing or sloshing electrolyte in the sump 44.

An air-bleed system (as best shown in Figure 9) lies adjacent the sump 44. The air-bleed system includes a trough 70 having a sloping floor 72 which terminates in an air-bleed hole 74 at its low end. A vent hole 76 above the trough opens into the sump 44. The air-bleed system allows gas/air to escape from the cell compartment while electrolyte is refluxing through the apertures 58 or the battery is being filled. Any electrolyte that might splash into the trough 70 will drain down the sloping floor 72 and back to the cell through the air-bleed hole 74. A depending baffle 78 is provided immediately adjacent the air-bleed hole 74 to minimize electrolyte entry into the air-bleed trough 70 from the interior of the battery.

Opposed walls 82 and 84 are provided immediately adjacent the antechamber-sump slots 50 and define capillary reflux channels 80. The opposed walls 82 and 84 are spaced sufficiently close together (i.e., about 2.5 mm) to capillarily draw any electrolyte from atop the floor 48 downwardly to the floor 56 of the sump 44. These walls 82, 84 extend the full height of the vertical slots 50, down along the riser portion 62 of the partition 52 and into engagement with the floor 56. Similarly, the venting/draining slots 58 each have a narrow vertical capillary reflux channel 85, defined by closely spaced (i.e., 2 mm) opposed walls 86 and 88 on the cell-side of the drainage slots 58. The lower discharge ends 91 of the vertical capillary reflux channels 85 are joined by a horizontal capillary reflux channel 90 which is formed between depending flanges 93 and 95 and serves to consolidate the reflux from the two vertical capillary reflux channels 85 into a single droplet. A pair of flat depending baffles 92 are provided immediately opposite, and closely spaced to, the slots 58 and serve to reduce entry of splashing/sloshing electrolyte into the apertures 58.

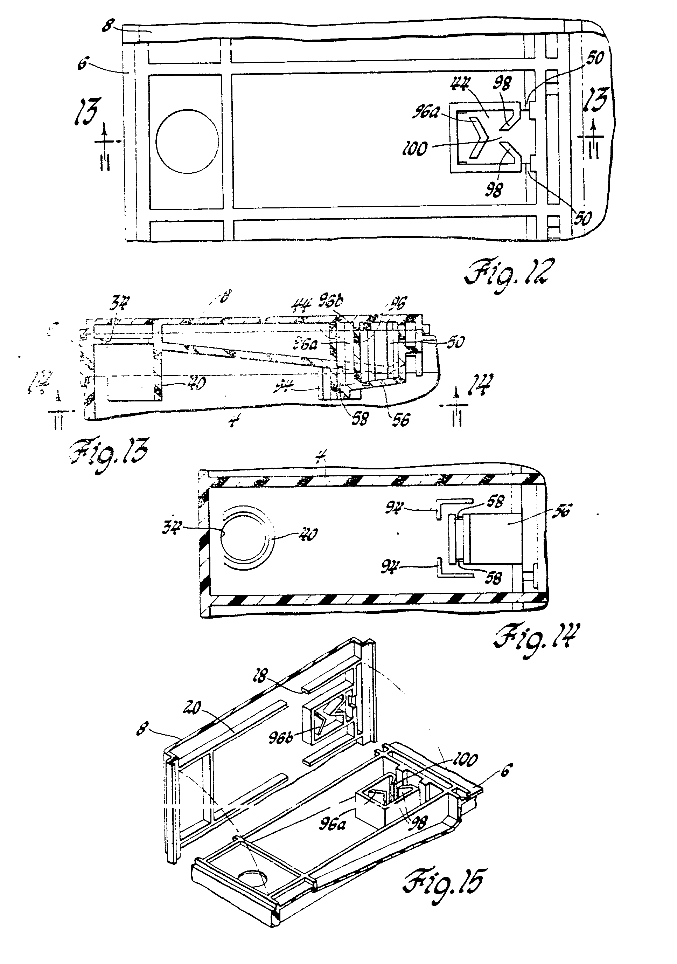

Figures 12—15 illustrate a preferred embodiment of the invention. This embodiment is essentially the same as that shown in Figures 2—11 but with certain significant differences. Only the differences are described herefter. The flat depending baffles 92 of the prior embodiment (see Figures 4 and 11) are replaced with L-shaped baffles 94 (see Figure 14) for improved protection of the venting/draining slots 58 against electrolyte invasion. Moreover, the H-shaped baffle 64 (see Figure 10) of the previous embodiment is replaced with a two-part baffle 96a and 96b. The lower part 96a of the baffle 96 is integral with, and upstands from, the inclined floor 56 of the sump 44, while the upper part 96b of the baffle 96 is integral with the final cover 8. The respective upper and lower parts join at the parting line between the intermediate and final covers and are thereat heat-sealed together. The H-shaped baffle being integral with the sump floor 56 eliminates any electrolyte creepage that might otherwise have occurred beneath the H-shaped baffle. Moreover, the new baffle 96 is V-shaped so as to offer a lesser impediment to electrolyte back flow toward the drainage slots 58. Still further, converging walls 98 are provided at the mouth of the sump 44 where the electrolyte flows back into the sump 44 from the antechamber 42. The converging walls 98 funnel the electrolyte toward a narrow gap 100 between the ends of the wall 98 which further inhibits electrolyte escape from the sump 44 into antechamber 42.

By utilising the principles of the present invention it has been possible: to produce venting systems which are at least 10 mm shallower than used in the assignee's prior commercial products; and at the same time to reduce the tendency of the battery to leak by at least 10 times (i.e., based on standard shaker and vibration tests of batteries tilted 20° toward the flame arrestor).

While this invention has been disclosed primarily in terms of specific embodiments thereof it is not intended to be limited thereto but rather only to the extent set forth in the claims which follow.

**Claims:**

1. A horizontal-type venting system formed in a cover of an electric storage battery (2) for relieving gases from the interior of the battery while inhibiting electrolyte escape therefrom, said venting system including an electrolyte drainage aperture (58) for refluxing electrolyte to said interior, an exhaust port (18, 24) for passing gases to the ambient atmosphere and an electrolyte trapping and refluxing chamber between said aperture and said port, in which said chamber comprises an antechamber (42) adjacent said exhaust port (18, 24), said antechamber being defined in part by a canted floor (48) sloping downwardly from said port in a first direction towards a sump (44) situated at substantially the lowest point (54) of said canted floor (48), and said sump (44) being defined in part by an inclined floor (56) lying beneath said canted floor and sloping downwardly towards said aperture (58) in a direction substantially different than said first direction, characterised in that said chamber includes partition means (46, 52) extending from and above said inclined (56) and canted (48) floors, said partition means further defining said sump (44) and separating it from said antechamber (42) and said interior; and a substantially vertical slot (50) in said partition means (46, 52) at substantially said lowest point of said canted floor (48) for providing flow communication between said sump (44) and said antechamber (42), said slot (50) being sufficiently narrow as to permit egress of gas from said sump (44) and regress of electrolyte to said sump (44) but to inhibit egress of electrolyte from said sump (44).

2. A horizontal-type venting system formed in the cover of an electric storage battery according to claim 1, characterised in that said chamber includes baffle means (64, 96*a*, 96*b)* positioned in said sump (44) between said aperture (58) and said slot (50) to deflect electrolyte moving between said aperture and said slot.

3. A horizontal-type venting system formed in the cover of an electric storage battery according to claim 1 or 2, characterised in that the partition means (46, 52) extend substantially vertically from and above said inclined (56) and canted (48) floors, said partition means including portions (52) lying in planes substantially parallel to said first direction.

4. A horizontal-type venting system formed in the cover of an electric storage battery according to any one of the proceding claims, characterised in that said partition means (46, 52) include a riser portion (62) between said slot (50) and said inclined floor (56).

5. A horizontal-type venting system formed in the cover of an electric storage battery according to claim 4, characterised in that the chamber includes means (80) associated with said slot (50) and said riser (62) for capillarily refluxing any electrolyte on said canted floor (48) at said lowest point (54) back into said sump (44) for ultimate return to said interior through said aperture (58).

6. A horizontal-type venting system formed in the cover of an electric storage battery according to any one of the preceding claims, characterised in that the chamber includes means (85) associated with said aperture (58) for capillarily refluxing any electrolyte in said sump back into said interior.

7. A horizontal-type venting system formed in the cover of an electric storage battery according to claim 1, characterised in that said partition means (46, 52) include a pair of opposed walls (52) each lying in a plane substantially parallel to said first direction and having a said aperture (58) therein at substantially the lowest point of said inclined floor (56) and a said vertical slot (50) therein at substantially the lowest point (54) of said canted floor (48) for communicating said antechamber (42) with said sump (44); and means (85) substantially vertically associated with each of said apertures (58) and said opposed walls (52) for capillarily refluxing any electrolyte in said sump (44) back into said interior.

8. A horizontal-type venting system formed in the cover of an electric storage battery according to claim 7, characterised in that said apertures (58) are elongated vertical apertures, said means (85) are substantially vertically associated with each of said apertures (58) and said opposed walls (52) for capillarily refluxing any electrolyte in said sump (44) back into said interior, said capillary refluxing means (85) having an inlet end at said aperture (58) and a discharge end (91) below said aperture (58); and there are means (90) extending substantially horizontally between said discharge ends (91) for capillarily consolidating the reflux from said apertures (58) into a single droplet for return to the interior.

**Patentansprüche**

1. In dem Deckel einer elektrischen Speicherbatterie (2) ausgebildetes Horizontal-Entlüftungssystem zum Entlassen von Gasen aus dem Inneren der Batterie bei gleichzeitigem Verhindern des Entweichens von Elektrolyt aus dieser, wobei das Entlüftungssystem eine Elektrolyt-Ablaßöffnung (58) zum Wiedereinleiten von Elektrolyt in das Innere, einen Ablaß-Anschluß (18, 24) zum Ableiten von Gasen an die Umgebungsatmosphäre und eine Elektrolyt-Auffang- und -Wiedereinleitkammer zwischen der Öffnung und dem Anschluß besitzt, worin die Kammer eine dem Ablaßanschluß (18, 24) benachbarte Vorkammer (42) umfaßt, welche teilweise durch einen schrägen Boden (48) bestimmt ist, der von dem Anschluß in einer ersten Richtung zu einem Sumpf (44) nach unten verläuft, der an der im wesentlichen untersten Stelle (54) des schrägen Bodens (48) gelegen ist, und der Sumpf (44) teilweise durch einen geneigten Boden (56) bestimmt ist, der unterhalb des schrägen Bodens liegt und zu der Öffnung (58) hin in einer wesentlich gegen die erste Richtung unterschiedlichen Richtung nach unten verläuft, dadurch gekennzeichnet, daß die Kammer Unterteilungsmittel (46, 52) enthält, das sich von dem geneigten (56) und dem schrägen (48) Boden nach oben erstreckt, wobei das Unterteilungsmittel weiter den Sumpf (44) bestimmt und ihn von der Vorkammer (42) und dem Inneren abteilt, und einen im wesentlichen vertikalen Schlitz (50) in dem Unterteilungsmittel (46, 52) an der im wesentlichen untersten Stelle des schrägen Bodens (48), um eine Fließverbindung zwischen dem Sumpf (44) und der Vorkammer (42) zu schaffen, wobei der Schlitz (50) ausreichend eng ist, um ein Austreten von Gas von dem Sumpf (44) und Abfließen von Elektrolyt zu dem Sumpf (44) zuzulassen, jedoch Austreten von Elektrolyt aus dem Sumpf (44) zu verhindern.

2. In dem Deckel einer elektrischen Speicherbatterie ausgebildetes Horizontal-Entlüftungssystem nach Anspruch 1, dadurch gekennzeichnet, daß die Kammer in dem Sumpf (44) zwischen der Öffnung (58) und dem Schlitz (50) angeordnete Prallplattenmittel (64, 96a, 96b) enthält, um sich zwischen der Öffnung und dem Schlitz bewegenden Elektrolyt abzulenken.

3. In dem Deckel einer elektrischen Speicherbatterie ausgebildetes Horizontal-Entlüftungssystem nach Anspruch 1 oder 2, dadurch gekennzeichnet, daß das Abteilungsmittel (46, 52) sich im wesentlichen vertikal von dem geneigten (56) und schrägen (48) Boden nach oben erstreckt, wobei das Unterteilungsmittel Abschnitte (52) enthält, die in im wesentlichen zur ersten Richtung parallelen Ebenen liegen.

4. In dem Deckel einer elektrischen Speicherbatterie ausgebildetes Horizontal-Entlüftungssystem nach einem der vorangehenden Ansprüche, dadurch gekennzeichnet, daß das Unterteilungsmittel (46, 52) einen Steiger-Abschnitt (62) zwischen dem Schlitz (50) und dem geneigten Boden (56) enthält.

5. In dem Deckel einer elektrischen Speicherbatterie ausgebildetes Horizontal-Entlüftungssystem nach Anspruch 4, dadurch gekennzeichnet, daß die Kammer dem Schlitz (50) und dem Steiger (62) zugeordnete Mittel (80) enthält, um Elektrolyt an dem schrägen Boden (48) bei der untersten Stelle (54) durch Kapillarwirkung in den Sumpf (44) zurückzuleiten, um ihn schließlich durch die Öffnung (58) zum Inneren zurückzuführen.

6. In dem Deckel einer elektrischen Speicherbatterie ausgebildetes Horizontal-Entlüftungssystem nach einem der vorangehenden Ansprüche, dadurch gekennzeichnet, daß die Kammer der Öffnung (58) zugeordnete Mittel (85) enthält, um durch Kapillarwirkung Elektrolyt in dem Sumpf in das Innere zurückzuleiten.

7. In dem Deckel einer elektrischen Speicherbatterie ausgebildetes Horizontal-Entlüftungssystem nach Anspruch 1, dadurch gekennzeichnet, daß das Abteilungsmittel (46, 52) zwei einander gegenüberliegende Wände (52) enthält, die jeweils in einer im wesentlichen zu der ersten Richtung parallelen Ebene liegen und die Öffnung (58) darin im wesentlichen an der untersten Stelle des geneigten Bodens (56) und den Vertikalschlitz (50) an im wesentlichen der untersten Stelle (54) des schrägen Bodens (48) enthaltenzur Verbindung der Vorkammer (42) mit dem Sumpf (44) und im wesentlichen vertikal jeder Öffnung (58) und dem entgegengesetzt liegenden Wänden (52) zugeordnete Mittel (85), um durch Kapillarwirkung Elektrolyt in dem Sumpf (44) in das Innere zurückzuleiten.

8. In dem Deckel einer elektrischen Speicherbatterie ausgebildetes Horizontal-Entlüftungssystem nach Anspruch 7, dadurch gekennzeichnet, daß die Öffnungen (58) längliche Vertikal-Öffnungen sind, die Mittel (85) im wesentlichen vertikal jeder Öffnung (58) und den einander gegenüberliegenden Wänden (52) zugeordnet sind, um Elektrolyt in dem Sumpf (44) durch Kapillarwirkung in das Innere zurückzuleiten, wobei die durch Kapillarwirkung zurückleitenden Mittel (85) ein Einlaßende an der Öffnung (58) und ein Ablaßende (91) unter der Öffnung (58) besitzen, und daß sich im wesentlichen horizontal zwischen den Ablaßenden (91) erstreckende Mittel vorhanden sind, um durch Kapillarwirkung den Rückfluß von den Öffnungen (58) zur Rückleitung zum Inneren in ein einziges Tröpfchen zu vereinigen.

**Revendications**

1. Système de ventilation du type horizontal formé dans un couvercle d'une batterie d'accumulateurs électriques (2) pour libérer des gaz de l'intérieur de la batterie tout en empêchant l'électrolyte de s'en échapper, ledit système de ventilation comportant une ouverture de drainage d'électrolyte (58) pour le reflux d'électrolyte vers ledit intérieur, un orifice d'échappement (18, 24) pour laisser passer des gaz vers l'atmosphère ambiante et une chambre de retenue et de reflux d'électrolyte entre ladite ouverture et ledit orifice, dans lequel ladite chambre comporte une préchambre (42) voisine dudit orifice d'échappement (18, 24), ladite préchambre étant définie en partie par un fond en pente (48) dirigé vers le bas à partir dudit orifice dans une première directions vers un réservoir (44) situé partiellement au point le plus bas (54) dudit fond en pente (48) et ledit réservoir (44) étant défini en partie par un fond incliné (56) situé derrière ledit fond en pente et dirigé vers le bas vers ladite ouverture (58) dans une direction nettement différente de ladite première direction, caractérisé en ce que ladite chambre comporte un dispositif de cloisonnement (46, 52) s'étendant à partir et au-dessus dudit fond incliné (56) et dudit fond en pente (48), ledit dispositif de cloisonnement définissant en outre ledit réservoir (44) et le séparant de ladite antichambre (42) et dudit intérieur; et une fente pratiquement verticale (50) dans ledit dispositif de cloisonnement (46, 52) au point pratiquement le plus bas dudit fond en pente (48) pour établir une communication d'écoulement entre ledit réservoir (44) et ladite préchambre (42), ladite fente (50) étant suffisamment étroite pour permettre la sortie de gaz dudit réservoir (44) et le retour d'électrolyte vers ledit réservoir (44) mais en empêchant la sortie d'électrolyte dudit réservoir (44).

2. Système de ventilation du type horizontal formé dans le couvercle d'une batterie d'accumulateurs électriques selon la revendication 1, caractérisé en ce que ladite chambre comporte un dispositif déflecteur (64, 96a, 96b) positionné dans ledit réservoir (44) entre ladite ouverture (58) et ladite fente (50) pour dévier l'électrolyte qui se déplace entre ladite ouverture et ladite fente.

3. Système de ventilation du type horizontal formé dans le couvercle d'une batterie d'accumulateurs électriques selon la revendication 1 ou 2, caractérisé en ce que le dispositif de cloisement (46, 52) s'étend pratiquement verticalement à partir et au-dessus desdits fonds incliné (56) et en pente (48), ledit dispositif de cloisement comportant des parties (52) se situant dans des plans pratiquement parallèles à ladite première direction.

4. Système de ventilation du type horizontal formé dans le couvercle d'une batterie d'accumulateurs électriques selon l'une quelconque des revendications précédentes, caractérisé en ce que ledit dispositif de cloisonnement (46, 52) comporte une partie de colonne montante (62) entre ladite fente (50) et ledit fond incliné (56).

5. Système de ventilation du type horizontal formé le couvercle d'une batterie d'accumulateurs électriques selon la revendication 4, caractérisé en ce que la chambre comporte un dispositif (80) associé avec ladite fente (50) et ladite colonne montante (62) pour le reflux par capillarité de tout électrolyte sur ledit fond en pente (48) audit point le plus bas (54) en retour dans ledit réservoir (44) pour un retour final vers ledit intérieur par ladite ouverture (58).

6. Système de ventilation du type horizontal formé dans le couvercle d'une batterie d'accumulateurs électriques selon l'une quelconque des revendications précédentes, caractérisé en ce que la chambre comporte un dispositif (85) associé avec ladite ouverture (58) pour le reflux par capillarité de tout électrolyte dans ledit réservoir, en retour vers ledit intérieur.

7. Système de ventilation du type horizontal formé le couvercle d'une batterie d'accumulateurs électriques selon la revendication 1, caractérisé en ce que ledit dispositif de cloisonnement (46, 52) comporte une paire de parois opposées (52) se situant chacune dans un plan pratiquement parallèle à ladite première direction et comprenant ladite première ouverture (58) pratiquement au point le plus bas dudit fond incliné (56) et ladite fente verticale (50) pratiquement au pont le plus bas (54) dudit fond en pente (48) pour faire communiquer ladite préchambre (42) avec ledit réservoir (44) et un dispositif (85) associé verticalement avec chacune desdites ouvertures (58) et lesdites parois opposées (52) pour le reflux par capillarité de tout électrolyte dans ledit réservoir (44) en retours vers ledit intérieur.

8. Système de ventilation de type horizontal formé dans le couvercle d'une batterie d'accumulateurs électriques selon la revendication 7, caractérisé en ce que lesdites ouvertures (58) sont des ouvertures verticales allongées, ledit dispositif (85) étant associé pratiquement verticalement avec chacune desdites ouvertures (58) et lesdites parois opposées (52) pour le reflux par capillarité d'électrolyte dans ledit réservoir (44) en retour vers ledit intérieur, ledit dispositif de reflux par capillarité (85) comportant une extrémité d'entrée à ladite ouverture (58) et une extrémité de décharge (91) au-dessous de ladite ouverture (58), un dispositif (90) étant prévu, s'étendant horizontalement entre lesdites extrémités d'évacuation (91) pour renforcer par capillarité le reflux depuis lesdites ouvertures (58) en une seule gouttelette pour le retour vers l'intérieur.

*Fig.1*

*Fig. 2*

Fig.3

Fig.4

Fig.5

Fig.6

Fig.7

Fig.8

Fig.9

Fig.10

Fig.11

Fig. 12

Fig. 13

Fig. 14

Fig. 15